# EUROPÄISCHE PATENTSCHRIFT

(11) **EP 1 669 823 B1**
(45) Veröffentlichungstag und Bekanntmachung des Hinweises auf die Patenterteilung: **17.11.2010**
(21) Anmeldenummer: 05107986.1
(22) Anmeldetag: 01.09.2005
(51) Int. Cl.: G05B 19/042, B60R 16/02, B60G 17/015

(54) **Verfahren zur adaptiven Einstellung einer Fahrzeugsteuerung**
Method for adaptive vehicle control adjustment
Procédé d'ajustement adaptatif pour la commande d'un véhicule

(30) Priorität: 23.10.2004 DE 102004051637
(43) Veröffentlichungstag der Anmeldung: 14.06.2006
(73) Patentinhaber: Continental Aktiengesellschaft, 30165 Hannover (DE)
(72) Erfinder: Grotendorst, Jörg, 30823, Garbsen (DE); Rohde, Andreas, 38106, Braunschweig (DE)

(56) Entgegenhaltungen:
- EP-A- 0 811 528
- DE-A1- 4 033 574
- DE-A1- 10 020 057

## Beschreibung

Die Erfindung betrifft ein Verfahren zur adaptiven Einstellung einer zentralen Steuerungseinrichtung für ein Fahrzeug oder ein Fahrzeugsystem, insbesondere einer Steuerungseinrichtung für Fahrwerkskomponenten, wobei die Steuerungseinrichtung im wesentlichen besteht aus mindestens einer Recheneinheit, aus mindestens einem zugehörigen Programmspeicher für die Algorithmen der Ablaufsteuerung, aus einem oder mehreren Datenspeichern zur Speicherung von Parametern bzw. Parameterfeldern für die Ablaufsteuerung und Signaldaten von Sensoren, Sollwertgebern und Datenleitungen, sowie aus zugehörigen Schnittstellen für Ein- und Ausgangssignale der Peripherie und der angesteuerten Bauelemente, wobei Teile der Parameter oder Parameterfelder und / oder Teile der Algorithmen der Ablaufsteuerung mit Hilfe einer separaten und nicht zur Steuerungseinrichtung gehörigen externen Datenverarbeitungseinrichtung bearbeitet bzw. überschrieben und die bearbeiteten oder überschriebenen Parameter oder Algorithmen auf die Steuerungseinrichtung übertragen werden.

Verfahren zur adaptiven Einstellung von Steuerungseinrichtungen für Kraftfahrzeuge, d.h. zur Einstellung der Fahrzeugsteuerung auf besondere Betriebsarten, auf besondere Umgebungsbedingungen und auf spezielle Fahrerwünsche, sind in vielfältigen Ausführungen bekannt.

So offenbart die DE 43 40 289 C2 ein integriertes Steuersystem für Kraftfahrzeuge, bei dem festgelegte und in der zentralen Fahrzeugsteuereinrichtung gespeicherte Sätze von Steuerparametern nach einer Fahreridentifikation bestimmten Fahrern zugeordnet und als Betriebsparameter für - nachgeordnete - Fahrzeugsteuermittel bzw. -steuereinheiten zur Verfügung gestellt werden. Neben von bestimmten Fahrern festgelegten und gespeicherten Sätzen von Parametern sind auch direkt im Fahrzeug programmierbare Einstellungen bzw. Parameter fahrerindividuell abrufbar, wie z.B. Radiolautstärke, Sitz- und Spiegeleinstellungen etc. Zusätzlich dient die Zuordnung der Diebstahlsicherheit, da bei nicht autorisierten Fahrern das Fahrzeug nach einer bestimmten Zeit nur noch eingeschränkt betrieben werden kann oder abgeschaltet wird, oder über Kommunikationseinrichtungen Meldungen absetzen kann.

Die DE 100 33 770 A1 zeigt ein System zur manuellen Einstellung eines Fahrwerksystems, insbesondere eines Luftfedersystems, bei dem verschiedene vorgegebene Grundeinstellungen, beispielsweise Grundeinstellungen der Dämpfung, vom Fahrer ausgewählt und eingerichtet werden können. Dies geschieht über ein Eingabeinstrument im Fahrzeug, welches ein Bedienfeld mit Menüführung oder ähnliches aufweist. Auch können hiermit beladungsabhängig die Fahrzeughöhe und der Reifendruck in bestimmten Relationen zueinander eingestellt werden.

Die DE 195 08 302 zeigt ein System zur Fahrwerksregelung, bei dem mindestens eine Fahrwerkeigenschaft vom Fahrer manuell einstellbar und damit der Fahrwerksregelung als "fahreradaptiver" Parameter vorgegeben ist. Solch ein Parameter könnte beispielsweise eine Dämpfereinstellung in vorgegebenen Stufen wie etwa "hart" oder "weich", "sportlich" oder "komfortabel" sein. Auch könnte ein Parameter kontinuierlich verstellbar sein.

Aus der DE 41 33 237 A1 ist ein System zur Fahrwerksregelung bekannt, bei dem die Fahrwerksregelung abhängig von einem sensorisch über mindestens eine relevante (Bewegungs-) Größe ermittelten Fahrzustand bzw. vertikaldynamischen Bewegungszustand erfolgt. Dieser Fahrzustand kann dabei entweder die Spezifika der Umgebungsbedingungen / des Untergrundes repräsentieren, oder aber den individuellen Fahrstil des Fahrers, oder beides. Zur Durchführung einer solchen Fahrwerksregelung sind natürlich aufwendigste Meß- und Auswertevorrichtungen und auch komplizierte Algorithmen erforderlich, die Einflüsse aus Fahrstil und Straßenanregung unterscheiden können.

Die DE 36 09 396 A1 offenbart ein Fahrzeugregelsystem, bei welchem der Fahrer eine Umschaltung in die Fahrwerkseigenschaften "hart" oder "weich" vornehmen oder in einen Automatikbetrieb zur Einstellung der Fahrwerkseigenschaften schalten kann. Der Automatikbetrieb verarbeitet dann u.a. Geschwindigkeits- Roll- und Lenkungsinformationen, um abhängig vom so ermittelten Fahrzustand eine Umschaltung "hart - weich" an der Hinterradaufhängung und der Vorderradaufhängung vorzunehmen. Hierdurch werden die Fahrzeugeigenschaften im Hinblick auf Untersteuern oder Übersteuern beeinflußt.

Die DE 33 43 007 A1 zeigt ein Fahrzeugregelsystem, bei dem die Lenkcharakteristik der Servolenkung in Abhängigkeit von der Veränderung der Dämpfung an den Radaufhängungen verändert wird. Die Änderung der Dämpfung wird dabei auf Fahrerwunsch z.B. mit Hilfe einer Luftfeder oder eines verstellbaren hydraulischen Dämpfers erreicht.

Die DE 34 85 842 T2 (EP 0133589 B1) offenbart ein Fahrwerkregelsystem, bei dem die Bewegungsgrößen und der Abstand der Achse in Bezug auf das Fahrgestell / die Karosserie bei einer jeden Radaufhängung ermittelt werden und abhängig davon die Einstellung und Regelung sowohl der Dämpfung jeder Radaufhängung als auch ihrer Federkonstanten erfolgen.

Bis auf das letztgenannte System, welches keinerlei Einstellbereiche aufweist, zeigen alle Systeme hierbei die Gemeinsamkeit, dass ihre individuelle Anpassung auf z.B. Fahrerwünsche oder zu erwartende Straßenverhältnisse durch herstellerseitig vorgebene Einstellungen zwar möglich, aber doch relativ begrenzt ist. Eine solche Anpassung erfolgt bisher entweder durch eine Auswahl vorgegebener Parametersätze (z.B. Dämpfung hart, Dämpfung weich) oder über menügeführte Einstellungen (sogenannte "Programmierungen"), die letztlich aber auch wieder auf bereits vorgegebene Parametersätze zurückgreifen.

Jede dieser durch unterschiedliche Parametersätze sich darstellenden Varianten ist natürlich vom Hersteller der Steuerung bzw. des Kraftfahrzeuges auf das sorgfältigste ausgelegt und geprüft auf ihre Auswirkung im Hinblick auf die verbleibenden und nicht geänderten Parameter, Algorithmen und Steuerungsfunktionen, jedoch einmal festgelegt und nicht mehr veränderbar.

Das führt dazu, dass in aller Regel bereits zum Auslieferungszeitpunkt eines Fahrzeuges die Einstellungsvarianten der Steuerung für das gesamte Fahrzeugleben, das ja immerhin leicht über 10 Jahre dauern kann, festgeschrieben sind. Maßgebend für die vorstellbaren zukünftigen Änderungen der Steuerung ist also lediglich der Stand der Technik zum Herstellungszeitpunkt eines Fahrzeuges und der bis dahin bekannte Trend oder Fahrergeschmack.

Die DE 40 33 574 A1 offenbart ein Kraftfahrzeugsteuersystem, bei dem direkt in einem Fahrzeug durch Eingabe von bestimmten Fahrerinformationen das Fahrzeugsteuersystem bzw. dessen Verhalten in gewisser Weise auf die Wünsche oder die Möglichkeiten des Fahrers angepasst werden kann. Dabei wird auch überprüft, ob die nach der Eingabe vorhandenen Werte in einem zulässigen Bereich liegen. Wenn dies nicht der Fall ist, erfolgt keine Übernahme des Änderungswertes.

Die DE 100 20 057 offenbart ein Verfahren zum Betrieb einer elektronischen Bedieneinheit im Kraftfahrzeug, bei der betriebsrelevante Daten über eine kabellose Schnittstelle von einem externen Gerät importiert bzw. von innen, d. h., von innerhalb des Kraftfahrzeuges exportiert werden. Dabei können die Daten auch extern bearbeitet werden.

Die EP 0 811 528 A2 offenbart eine Ansteuereinrichtung zum Ansteuern elektrischer oder elektronischer Komponenten innerhalb eines Fahrzeuges und schaltet diese Kommunikation über eine zentrale Leitung und eine zentrale Elektronik, die in Form eines bidirektionalen Datenbus arbeitet.

Es war somit Aufgabe der Erfindung, ein Verfahren zur Einstellung einer Fahrwerksteuerung bereitzustellen, das ohne zeitliche Begrenzung eine individuelle Anpassung an oder durch den Fahrer zuläßt, und das es weiterhin erlaubt, auch zukünftige und zum Auslieferungszeitpunkt noch nicht absehbare Entwicklungen für Steuersysteme nachträglich zu realisieren, ohne das Steuerungssystem insgesamt auszutauschen und das eine sichere Überprüfung der Anpassung bzw. der zugehörigen Datenübertragung erlaubt.

Gelöst wird diese Aufgabe durch die Merkmale des Hauptanspruchs. Eine weitere w vorteilhafte Ausbildung ist durch die Merkmale des Unteranspruchs beschrieben.

Erfindungsgemäß ist vorgesehen, dass eine Kopie der unveränderten und ursprünglich vorhandenen Parameter oder Algorithmen in einem für die externe Datenverarbeitungseinrichtung nicht zugänglichen Speicher der Steuerungseinrichtung aufbewahrt oder abgelegt wird, dass die geänderten Parameter und/oder Algorithmen in der Steuerungseinrichtung mit Hilfe von gespeicherten und für die externe Datenverarbeitungseinrichtung nicht zugänglichen Prüfalgorithmen und Grenzwerten überprüft werden und dass bei Überschreitung der vorgegebenen Grenzwerte und/oder bei fehlerhaften Daten die Speicherung der bearbeiteten oder überschriebenen Parameter oder Algorithmen unterbrochen und/oder verworfen wird und die unveränderten und ursprünglich vorhandenen Parameter (8) oder Algorithmen an ihren ursprünglichen Speicherplätzen wiederhergestellt werden.

Dabei werden in der Steuerungseinrichtung bei bzw. vor einer Übernahme oder Speicherung der bearbeiteten oder überschriebenen Parameter oder Algorithmen eine Kopie der unveränderten und ursprünglich vorhandenen Parameter oder Algorithmen in einem für die externe Datenverarbeitungseinrichtung nicht zugänglichen Speicher aufbewahrt oder abgelegt wird (Sicherheitskennfeld) und in der Steuerungseinrichtung die geänderten Parameter und / oder Algorithmen mit Hilfe von gespeicherten und für die externe Datenverarbeitungseinrichtung nicht zugänglichen Prüfalgorithmen und Grenzwerten überprüft. Abhängig von dieser Prüfung wird die Speicherung der bearbeiteten oder überschriebenen Parameter oder Algorithmen abgeschlossen oder unterbrochen / verworfen.

Die Parameter oder Parameterfelder können einstellbare Parameter für die Ablaufsteuerung umfassen, ebenso Parameter aus Signaldaten von Sensoren, Sollwertgebern, oder auch über Datenleitungen übertragene Parameter. Solche Parametersätze sowie die Algorithmen der Ablaufsteuerung können z. B in den nicht flüchtigen (ROM) Speichern der Steuerungseinrichtung gespeichert sein. Von dort werden sie zur Verarbeitung üblicherweise in eine flüchtigen Speicher (RAM) kopiert, sodass mit den so kopierten Werten dann die Steuerungsprogramme ablaufen und die eigentliche Steuerungsaufgabe durchgeführt werden kann.

Es lassen sich so bestimmte Parameterfelder oder Teile des Algorithmus mit Hilfe einer externen Datenverarbeitungseinrichtung, z.B. also mit einem unabhängig vom Fahrzeug zu betreibenden PC, in bestimmter und gewünschter Weise bearbeiten und vorbereiten. Die so bearbeiteten Daten werden dann auf die Fahrzeugsteuerung übertragen. Es wird auf diese Weise also nicht zwischen bereits in den Speichern der Fahrzeugsteuerung eingelesenen und vorgegebenen Parameterfeldern / Parametersätzen umgeschaltet, sondern es werden neue, andere und/oder zusätzliche Parameter in die Speicher eingelesen.

Der Vorteil hierbei ergibt sich dadurch, dass die Parameterfelder oder Teile des Algorithmus vollkommen variabel an Fahrerwünsche, Betriebsarten, und besondere Umgebungsbedingungen angepasst werden können und nicht mehr vorbestimmte Stufungen eingehalten werden müssen. So lassen sich z.B. Fahrwerksteuerungen von "Off Road" Fahrzeugen genau auf ihre augenblickliche Umgebung und die besonderen Befindlichkeiten des Fahrers anpassen.

Ebenfalls ist es möglich, eine zentrale Fahrzeugsteuerung oder Fahrzeugsystemsteuerung auf neue Generationen lateraler oder untergeordneter Steuergeräte anzupassen, nämlich in den Fällen, in denen Ersatzteile neuerer Generationen bereits mit eigenen Steuermodulen ausgerüstet sind einen Teil der Steuerungsaufgaben übernehmen oder erweitern können, die zum Herstellungszeitpunkt des Fahrzeuges noch dem zentralen Steuergerät vorbehalten waren. Dies ermöglicht unter anderem eine optimierte Ersatzteilhaltung, da bei einer an neue Ersatzteilgenerationen anpassbaren zentralen Steuerung Ersatzteile nur noch über kürzere Perioden in großen Stückzahlen nachlieferbar sein müssen.

Letztlich wird natürlich auch das sogenannte Chip-Tuning erleichtert und ersetzt und in seinem Anwendungsbereich wesentlich erweitert.

Ergibt die Prüfung in der Steuerungseinrichtung, dass die neuen Parameter oder die neuen Teile des Algorithmus vorgegebene Grenzen nicht einhalten, dass fehlerhafte Daten vorhanden sind, oder dass die neuen Parameter oder Algorithmen einer Softwareprüfung mit Hilfe eines Prüfalgorithmus - beispielsweise mit einer ähnlichen Verfahrensweise, wie sie durch "Software in the Loop" durchgeführt wird - nicht standhalten, so werden die Änderungen verworfen und die unveränderten und ursprünglich vorhandenen Parameter, Teile der Parameterfelder und Teile der Algorithmen wiederhergestellt und weiter verwendet. Somit in jedem Fall die sichere Betriebsweise des Fahrzeugs gewährleistet.

Eine vorteilhafte Ausbildung besteht darin, dass die Übertragung der bearbeiteten oder überschriebenen Parameter oder Algorithmen auf die Steuerungseinrichtung mit Hilfe eines tragbaren elektronischen Speichers erfolgt., also beispielsweise unter Nutzung eines Miniatur-Rechners, z.b. eines Personal Digital Assistant (PDA), eines tragbaren Rechners (Notebook), einer CD - sofern ein Lesegerät im Fahrzeug vorhanden ist - , eines Speicherstiftes (Memo Stick), oder auch unter Nutzung eines tragbaren Telefons oder ähnlichen Speicherträgern / Speichermedien. So kann eine CD oder ein Speicherstift an einem beliebigen Rechner mit den bearbeiteten oder überschriebenen Parameter oder Algorithmen geladen und dann im Fahrzeug die Daten an die Fahrzeugsteuerung weitergeben werden. Auch die Übergabe ans Fahrzeug kann natürlich über die unterschiedlichsten Wege erfolgen. So ist eine einfach Kabelverbindung zur Steuerungseinheit oder zum Diagnosestecker ebenso möglich wie eine Hochfrequenzübertragung von Daten zwischen z. B. einem Mobiltelefon und einem Empfänger im Fahrzeug.

Das Verfahren ist vorteilhaft zu verwenden bei der adaptiven Einstellung einer zentralen Steuerungseinrichtung eines Luftfederfahrwerks eines Kraftfahrzeuges, wobei Parameter und / oder Algorithmen zur Steuerung der Fahrwerkshärte / Luftfederhärte und der Karosseriehöhe mit Hilfe einer separaten und nicht zur Steuereinrichtung gehörigen externen Datenverarbeitungseinrichtung bearbeitet bzw. überschrieben werden. Hierdurch läßt sich auf eine relativ einfache Weise jede Art von Einstellung der Federungseigenschaften und des Dämpfungskomforts erreichen. Insbesondere kann abhängig vom Fahrerwunsch eine mehrfache Veränderung leicht durchgeführt werden, nämlich solange, bis das gewünschte Fahrverhalten für den Fahrer fühlbar erreicht ist.

Ähnliche Vorteile ergeben sich bei der Verwendung des Verfahrens zur adaptiven Einstellung einer zentralen Steuerungseinrichtung für hydraulische Dämpfer eines Kraftfahrzeuges, wobei Parameter und / oder Algorithmen zur Steuerung der Dämpfungshärte und der Karosseriehöhe mit Hilfe einer separaten und nicht zur Steuereinrichtung gehörigen externen Datenverarbeitungseinrichtung bearbeitet bzw. überschrieben werden.

Vorteilhaft bei den vorgenannten Anwendungen ist es insbesondere, dass man lediglich in Bereiche eingreift, die unter entsprechender Berücksichtigung der vorgesehenen Fahrzeugkonstruktion und Fahrwerksabstimmung nur wenig tatsächliche Beeinflussungen des Fahrverhaltens gestatten, jedoch vom haptischen Empfinden des Fahrers den Eindruck einer völlig anderen Fahrzeugabstimmung und damit einer erheblichen Änderung des Fahrverhaltens vermitteln.

Ein zur Durchführung des Verfahrens nutzbares Steuergerät besteht aus mindestens einer Recheneinheit, aus mindestens einem zugehörigen Programmspeicher für die Algorithmen der Ablaufsteuerung, aus einem oder mehreren Datenspeichern zur Speicherung von Parametern bzw. Parameterfeldern für die Ablaufsteuerung und Signaldaten von Sensoren, Sollwertgebern und Datenleitungen, sowie aus zugehörigen Schnittstellen für Ein- und Ausgangssignale der Peripherie und der angesteuerten Bauelemente. Das Steuerungsgerät verfügt dabei über eine separate Schnittstelle für ein externes Datenverarbeitungsgerät oder einen externen Speicher sowie über einen für die externe Datenverarbeitungseinrichtung nicht zugänglichen Speicher.

Die Schnittstelle ist dabei als Steckerverbindung, z.B. als USB Schnittstelle oder als Parallel-Port mit einem schließbaren Deckel ausgeführt und im Armaturenbrett des Fahrzeuges integriert. Hierdurch erhält man einen sehr bequemen Zugang zum Steuergerät und es entfällt z. B. das Öffnen der Motorhaube und damit jegliche Verschmutzung oder auch Wärmebeeinflussung des jeweils genutzten Datenverarbeitungsgerätes oder Speichers.

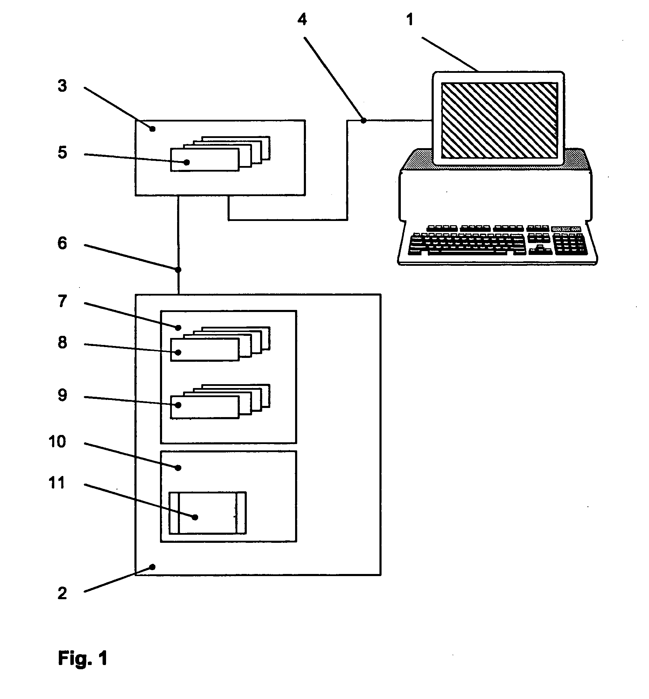

Anhand eines Ausführungsbeispiels soll die Erfindung näher erläutert werden. Die Figur 1 verdeutlicht das Verfahren in Form einer Skizze und anhand seiner technischen Ausprägung.

Fig. 1 zeigt eine separate Datenverarbeitungseinrichtung 1 in Form eines Rechners. Diese separate Datenverarbeitungseinrichtung gehört nicht zu einem Fahrzeug und ist in diesem Falle lediglich ein Werkstattrechner in einem KFZ-Reparaturbetrieb, der jedoch über die entsprechende Software zur Änderung von Parametern einer in einem nicht näher dargestellten Fahrzeug befindlichen Steuerungseinrichtung 2 eines Luftfederfahrwerks verfügt.

Ebenfalls ersichtlich ist in der Fig. 1 ein tragbarer Speicher 3, der hier als Teil eines Speichers eines tragbaren und ebenfalls nicht näher dargestellten Mobiltelefons ausgebildet ist.

In der Datenverarbeitungseinrichtung 1 wird nun zunächst ein zur Steuerung des Luftfahrwerkes des in Rede stehenden Fahrzeuges geeigneter Parametersatz so bearbeitet und überschrieben, das nach der Bearbeitung der Parametersatz einem individuellen Fahrerwunsch entspricht, nämlich einer sportlichen Einstellung eines bisher auf größtmöglichen Komfort ausgerichteten Luftfederfahrwerkes. Über eine Datenleitung 4 wird der bearbeitete Parametersatz 5 dann auf dem tragbaren Speicher 3 abgespeichert. Nach Beendigung der Datenverbindung und Trennung der Datenleitung 4 wird der tragbare Speicher 3 über eine Datenleitung 6 an die Steuerungseinrichtung 2 angeschlossen. Der Anschluß erfolgt dabei über eine hier nicht näher dargestellte Steckerverbindung am Armaturenbrett des Fahrzeuges.

Die Steuerungseinrichtung 2 weist u.a. einen "festen" (ROM) Speicher 7 auf, hier ausgebildet als EEPROM (EEPROM = Electrically Erasable Programmable Read Only Memory). Der Speicher 7 ist ein elektrisch löschbarer - und wieder beschreibbarer - Speicher und behält seinen Speicherinhalt auch bei Stromausfall. Im Speicher 7 ist u.a. der ursprünglich herstellerseitig eingestellte Parametersatz 8 gespeichert, der die Steuerung des Luftfederfahrwerkes zur Bereitstellung eines größtmöglichen Komforts unterstützt. Im Speicher 7 ebenfalls abgelegt ist das sogenannte Sicherheitskennfeld, nämlich ein weiterer Parametersatz 9, der in diesem Fall dem abgesicherten und herstellerseitig eingestellten Parametersatz 8 identisch entspricht. Während der Parametersatz 8 geändert werden kann, ist der Parametersatz 9 durch äußeren Eingriff oder externe Datenverarbeitungsgeräte oder Speicher nicht gleichzeitig beeinflußbar. In weiteren Bereichen des Speichers 7 sind auch die Algorithmen für die Ablaufsteuerung gespeichert.

Weiterhin weist die Steuerungseinrichtung 2 einen "flüchtigen" Speicher 10 auf, in diesem Fall einen RAM-Speicher (RAM = Random Access Memory). In diesem Bereich läuft - angestoßen durch der Programmrechner mit den Algorithmen für die Ablaufsteuerung und auch unter Nutzung des Parametersatzes 8 - der Ablauf des Steuerungsprogrammes 11 für die Steuerung / Regelung des Luftfederfahrwerkes.

Der extern bearbeitete Parametersatz 5 wird über die Datenleitung 6 auf die Steuerungseinrichtung 2 übertragen, wobei in der Steuerungseinrichtung 2 vor einer endgültigen Speicherung des bearbeiteten Parametersatzes 5 im Speicher 7 und damit vor dem endgültigen Überschreiben des Parametersatzes 8 der geänderte Parametersatz 5 mit Hilfe von gespeicherten und für externe Datenverarbeitungseinrichtungen oder externe Speichermedien nicht zugänglichen Prüfalgorithmen und Grenzwerten überprüft wird.

Abhängig von dieser Prüfung wird die Speicherung des bearbeiteten Parametersatzes 5 abgeschlossen und damit der Parametersatz 8 überschrieben, oder aber unterbrochen und der ursprüngliche Parametersatz 8 mit Hilfe einer Kopie aus dem Parametersatz 9 vollständig wiederhergestellt.

### Bezugszeichenliste

### (Teil der Beschreibung)

- 1: Datenverarbeutungseinrichtung
- 2: Steuerungseinrichtung
- 3: Tragbarer Speicher
- 4: Datenleitung
- 5: Parametersatz
- 6: Datenleitung
- 7: Speicher
- 8: Parametersatz
- 9: Parametersatz
- 10: Speicher
- 11: Steuerungsprogramm

## Patentansprüche

1. Verfahren zur adaptiven Einstellung einer zentralen Steuerungseinrichtung (2) für ein Fahrzeug oder ein Fahrzeugsystem, insbesondere einer Steuerungseinrichtung für Fahrwerkskomponenten, wobei die Steuerungseinrichtung (2) im wesentlichen besteht aus mindestens einer Recheneinheit, aus mindestens einem zugehörigen Programmspeicher für die Algorithmen einer Ablaufsteuerung, aus einem oder mehreren Datenspeichern (7, 10) zur Speicherung von Parametern bzw. Parameterfeldern für die Ablaufsteuerung und Signaldaten von Sensoren, Sollwertgebern und Datenleitungen, sowie aus zugehörigen Schnittstellen für Ein- und Ausgangssignale der Peripherie und der angesteuerten Bauelemente, wobei Teile der Parameter oder Parameterfelder (8) und / oder Teile der Algorithmen der Ablaufsteuerung mit Hilfe einer separaten und nicht zur Steuerungseinrichtung gehörigen externen Datenverarbeitungseinrichtung (1) bearbeitet bzw. überschrieben und die bearbeiteten oder überschriebenen Parameter (5) oder Algorithmen auf die Steuerungseinrichtung übertragen werden, **dadurch gekennzeichnet, dass** eine Kopie der unveränderten und ursprünglich vorhandenen Parameter (9) oder Algorithmen in einem für die externe Datenverarbeitungseinrichtung nicht zugänglichen Speicher (7) der Steuerungseinrichtung (2) aufbewahrt oder abgelegt wird, dass die geänderten Parameter (5) und/oder Algorithmen in der Steuerungseinrichtung mit Hilfe von gespeicherten und für die externe Datenverarbeitungseinrichtung (1) nicht zugänglichen Prüfalgorithmen und Grenzwerten überprüft werden und dass bei Überschreitung der vorgegebenen Grenzwerte und/oder bei fehlerhaften Daten die Speicherung der bearbeiteten oder überschriebenen Parameter oder Algorithmen unterbrochen und/oder verworfen wird und die unveränderten und ursprünglich vorhandenen Parameter (8) oder Algorithmen an ihren ursprünglichen Speicherplätzen wiederhergestellt werden.

2. Verfahren nach Anspruch 1, **dadurch gekennzeichnet, dass** die Übertragung der bearbeiteten oder überschriebenen Parameter oder Algorithmen auf die Steuerungseinrichtung mit Hilfe eines tragbaren elektronischen Speichers (3) erfolgt.

## Claims

1. Method for the adaptive adjustment of a central control device (2) for a vehicle or a vehicle system, particularly a control device for chassis components, wherein the control device (2) essentially comprises at least one computation unit, at least one associated program memory for the algorithms of a flow controller, one or more data memories (7, 10) for storing parameters or parameter fields for the flow controller and signal data from sensors, setpoint generators and data lines, and also associated interfaces for input and output signals from the peripheral area and the actuated elements, wherein portions of the parameters or parameter fields (8) and/or portions of the algorithms of the flow controller are edited or overwritten using a separate external data processing device (1) which is not part of the control device, and the edited or overwritten parameters (5) or algorithms are transmitted to the control device, **characterized in that** a copy of the unaltered and originally available parameters (9) or algorithms is kept or stored in a memory (7) of the control device (2), which memory is not accessible to the external data processing device, **in that** the amended parameters (5) and/or algorithms are checked in the control device using stored checking algorithms and limit values, which are not accessible to the external data processing device (1), and **in that** in the event of transgression of the prescribed limit values and/or in the event of erroneous data, the storage of the edited or overwritten parameters or algorithms is interrupted and/or rejected and the unaltered and originally available parameters (8) or algorithms are restored to their original memory locations.

2. Method according to Claim 1, **characterized in that** the edited or overwritten parameters or algorithms are transmitted to the control device using a portable electronic memory (3).

## Revendications

1. Procédé de réglage adaptatif d'un dispositif central de commande (2) d'un véhicule ou d'un système d'un véhicule, en particulier d'un dispositif de commande de composants du train de roulement, le dispositif de commande (2) étant constitué
d'au moins une unité de calcul,
d'au moins une mémoire-programme associée prévue pour les algorithmes de la commande d'un déroulement,
d'une ou plusieurs mémoires de données (7, 10) qui conservent des paramètres ou des champs de paramètres de la commande de déroulement et des données de signalisation de détecteurs, d'émetteurs de valeurs de consigne et de conducteurs de données,
ainsi que d'interfaces associées aux signaux d'entrée et de sortie de la périphérie et des composants commandés,
des parties des paramètres ou des champs de paramètres (8) et/ou des parties des algorithmes de la commande de déroulement étant traitées ou remplacées à l'aide d'un dispositif externe (1) de traitement de données séparé et n'appartenant pas au dispositif de commande,
les paramètres (5) ou les algorithmes traités ou remplacés étant transmis au dispositif de commande,
**caractérisé en ce que**
une copie des paramètres (9) ou algorithmes non modifiés ou initialement présents est conservée ou placée dans une mémoire (7) du dispositif de commande (2) qui n'est pas accessible au dispositif externe de traitement de données,
**en ce que** les paramètres (5) et/ou algorithmes modifiés sont vérifiés à l'aide d'algorithmes de vérification et de valeurs limites conservées en mémoire et non accessibles au dispositif externe (1) de traitement de données et
**en ce que** lorsque les valeurs limites prédéterminées sont dépassées et/ou lorsque des données sont erronées, la mise en mémoire des paramètres ou algorithmes traités ou remplacés est interrompue et/ou rejetée et les paramètres (8) ou algorithmes inchangés ou initialement présents sont rétablis dans leurs emplacements initiaux de mémoire.

2. Procédé selon la revendication 1, **caractérisé en ce que** la transmission des paramètres ou algorithmes traités ou remplacés au dispositif de commande s'effectue à l'aide d'une mémoire électronique portable (3).
